# EUROPÄISCHE PATENTSCHRIFT

(11) **EP 1 798 551 B1**
(45) Veröffentlichungstag und Bekanntmachung des Hinweises auf die Patenterteilung: **19.05.2010**
(21) Anmeldenummer: 06024271.6
(22) Anmeldetag: 23.11.2006
(51) Int. Cl.: G01N 30/24, G01N 30/18

(54) **Verfahren zur Vorbereitung von Proben für ein Analysegerät und Probennahmenstation hierfür**
Method for preparing samples for an analyser and sampling station therefor
Procédé destiné à la préparation d'échantillons pour un appareil d'analyse et station de prélèvement d'échantillons associée

(30) Priorität: 15.12.2005 DE 102005060291
(43) Veröffentlichungstag der Anmeldung: 20.06.2007
(73) Patentinhaber: Gerstel Systemtechnik GmbH & Co. KG, 45473 Mülheim (DE)
(72) Erfinder: Bremer, Ralf, 46117 Oberhausen (DE); Rose, Bernhard, 40627 Düsseldorf (DE)
(74) Vertreter: Henseler, Daniela

(56) Entgegenhaltungen:
- DE-C1- 10 219 790
- US-A- 4 199 988
- US-A1- 2005 229 723

## Beschreibung

Die Erfindung betrifft ein Verfahren zur Vorbereitung von Proben für ein Analysegerät und eine Probennahmestation hierfür.

Aus DE 102 19 790 C1 ist eine Handhabungseinrichtung für Proben für ein Analysegerät bekannt, die einen längs drei zueinander senkrechten Achsen beweglichen Greifer umfaßt, mit dem sich unterschiedliche Probenaufnehmer, so etwa unterschiedliche Spritzen als auch mit Transportköpfen ausgestattete Probenrohre, handhaben lassen. Spritzen haben ein bestimmtes Volumen, das durch die Bewegung ihres Kolbens aufgezogen wird. Hierdurch kann somit nur ein vorbestimmtes Volumen aus einem Probenbehälter, dessen Septum mittels der Spritzennadel durchstochen wird, aufgenommen werden. Es ist dementsprechend nicht möglich, mittels dieser Handhabungseinrichtung größere Volumina über eine Packung zu leiten, um die zu untersuchenden Substanzen einer Probe auf der Packung anzureichern.

Aus US 4,199,988 ist eine Vorrichtung zur Probennahme bekannt, in der in einem mit einem Septum verschlossenen Probenbehälter befindliche Substanzen gaschromatographisch untersucht werden können. Hierzu umfasst die Vorrichtung eine in einem Gehäuse verschiebbar befestigte Nadel. Um eine Probe zu nehmen, durchsticht die Nadel das Septum des Proben behälters, wodurch ein durch die Nadel fließender Inertgasstrom einen Überdruck in der Gasphase des Probenbehälters erzeugt. Nach einer vorbestimmten Zeit wird der Überdruck abgelassen, wodurch das mit den zu untersuchenden Substanzen beladene Trägergas über eine Trennsäule zu einem Detektor strömt.

Aus US 2005/0229723 A1 ist ein Verfahren zur Probenaufgabe für ein Probenanalysegerät bekannt. In diesem Verfahren wird ein Liner von einem führungsrohr aufgenommen und ist mit einem Transportkopf zum automatisierten Handhaben des Liners durch einen Autosampler versehen. Der Transportkopf umfasst ein Nadelführungsstück. Zur Probennahme fährt der Autosampler mit einer Spritze entsprechend einem vorbestimmten Programm über einen Probenbehälter mit zu untersuchenden Substanzen, entnimmt mittels der Spritze ein Probe und gibt über die Spritzennadel die Probe in den Liner auf. Zum Sorbieren oder Adsorbieren der zu untersuchenden Substanzen kann der Liner eine Packung aufnehmen. Alternativ kann der Liner zur Probennahme zur dynamischen Headspace Extraktion in den Probenbehälter geführt werden. Die Probenaufgabe erfolgt durch Einsetzen des Liners in eine Kaltaufgabeeinrichtung des Probenanalysegeräts und das Durchleiten eines Trägergases durch Bohrungen des Transportkopfs und den Liner in das Probenanalysegerät.

Aufgabe der Erfindung ist es, ein Verfahren zur Vorbereitung von Proben für ein Analysegerät und eine Probennahmestation hierfür zu schaffen, die es ermöglichen, automatisiert größere in einen Probenbehälter eingeführte Inertgasvolumina über eine Packung zu leiten, um die zu untersuchenden Substanzen einer Probe auf der Packung anzureichern.

Diese Aufgabe wird entsprechend den Merkmalen des Anspruchs 1 bzw. 8 gelöst.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt ausschnittweise eine Ausführungsform einer Probennahmestation im Schnitt.
Fig. 2 zeigt ausschnittweise einen um 90° gedrehten Schnitt der Probennahmestation von Fig. 1.
Fig. 3 zeigt den Ausschnitt von Fig. 1 bei der Probennahme.
Fig. 4 zeigt im Schnitt einen speziellen Probenbehälter mit aufgesetztem Probennehmer, der schematisiert dargestellt ist.
Fig. 5 und 6 zeigen schematisch eine Handhabungseinrichtung und eine Probennahmestation.

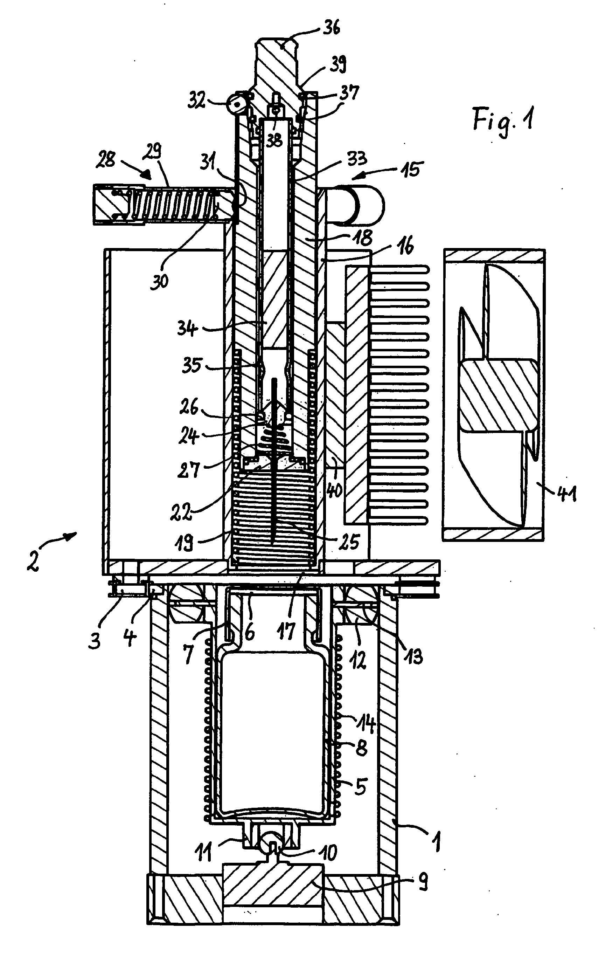

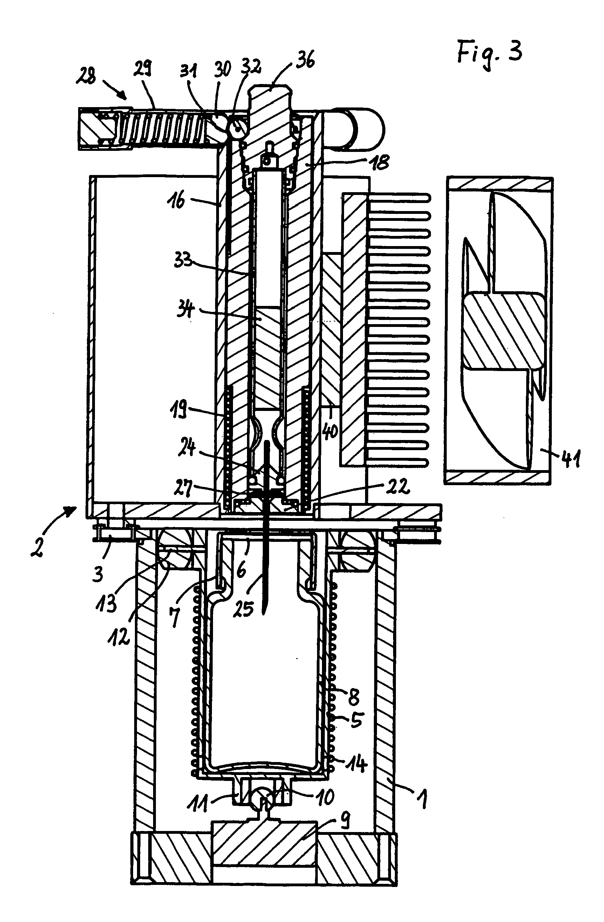

Die in Fig. 1 bis 3 dargestellte Probennahmestation umfaßt ein Gestell 1 mit einem schlittenförmigen Probennehmer 2, der über Rollen 3 längs Schienen 4 zwischen zwei Probennahmepositionen verfahrbar (oder verschwenkbar, nicht dargestellt) ist. Hiervon wird jeweils eine temporär als Vorbereitungs- und die andere als Entnahmeposition verwendet. In den Probennahmepositionen befindet sich jeweils eine trogartige Behälterhalterung 5 zur Aufnahme eines mit einer ein Septum 6 haltenden Kappe 7 versehenen Probenbehälters 8, in diesem Ausführungsbeispiel ein Vial.

Zweckmäßigerweise ist vorgesehen, daß sich die im jeweiligen Probenbehälter 8 befindliche Probe in den Probennahmepositionen schütteln läßt. Hierzu kann für flüssige Proben vorgesehen sein, daß der Probenbehälter 8 ein magnetisches Rührelement enthält, während unter der Behälterhalterung 5 in den Probennahmepositionen jeweils eine ein wechselndes Magnetfeld erzeugende Einrichtung zum Erzeugen einer Rührbewegung des Rührelements angeordnet ist. Auch kann das Rühren mittels Ultraschall vorgenommen werden.

Auch kann ein Schütteln der Behälterhalterung 5 und damit der Probe in dem davon aufgenommenen Probenbehälter 8 vorgesehen sein. Hierzu ist zweckmäßigerweise die Behälterhalterung 5 an ihrem oberen Ende kardanisch aufgehängt und über einen Elektromotor 9 antreibbar ist. Der Elektromotor 9 treibt im Betrieb eine exzentrisch auf seiner Welle sitzende Kugel 10 geschwindigkeitskontrolliert an, wobei die Kugel 10 in einem zentralen Hohlzapfen 11 unter dem Boden der Behälterhalterung 5 angeordnet ist und über ihre exzentrische Anordnung aufgrund der kardanischen Aufhängung an deren oberem Ende die Behälterhalterung 5 und damit einen darin befindlichen Probenbehälter 8 einer rotierenden Schwenkbewegung unterwirft.

Die kardanische Aufhängung kann über einen bombierten Ring 12, der über zwei um 180° gegenüber angeordnete Achsen 13 am Gestell 1 und an dem die Behälterhalterung 5 über zwei weitere hierzu um 90° versetzte Achsen 13 gelagert ist.

Um möglichst gleiche Temperaturbedingungen für die Probennahme zu gewährleisten, kann es zweckmäßig sein, die Behälterhalterung 5 mit einer Temperiereinrichtung etwa in Form einer Heizwicklung 14 und gegebenenfalls mit einer Kühleinrichtung, etwa einer Kühlmittel durchflossenen Kühlschlange (nicht dargestellt) zu umgeben.

Der Probennehmer 2 trägt eine Halterung 15, die ein vertikales Halterohr 16 umfaßt, das in eine Öffnung 17 des Schlittens 2 eingesetzt und damit zum jeweiligen Probenbehälter 8 hin als auch am oberen Ende offen ist. In das Halterohr 16 ist ein Aufnahmerohr 18 für ein Probenrohr 33 eingesetzt, wobei unterhalb des Aufnahmerohrs 18 eine dieses in Richtung nach oben beaufschlagende Feder 19 im Halterohr 16 angeordnet ist. Die Feder 19 stützt sich an einer einwärts gerichteten Schulter des Halterohrs 16 auf.

Das Halterrohr 16 weist einen Gaseintrittsanschluß 20 im mittleren Bereich und einen Gasaustrittsanschluß 21 im oberen Bereich auf. Das Probenrohr 33 trägt an dem der Behälterhalterung 5 zugewandten Ende einen über O-Ringe dicht eingesetzten Einsatz 22, der eine etwas exzentrisch angeordnete Spritzennadel 23 trägt, deren Zutrittsöffnung mit einer (nicht dargestellten) Öffnung in der Wandung des Aufnahmerohrs 18 in Verbindung steht.

Über dem Einsatz 22 befindet sich im Aufnahmerohr 18 ein weiterer Einsatz 24, der eine sich durch den Einsatz 22 hindurch erstreckende, mittig verlaufende Spritzennadel 25 trägt, deren obere Öffnung sich im Inneren des Aufnahmerohrs 18 befindet. Zweckmäßigerweise ist der Einsatz 24 über einen O-Ring 26 in Bezug auf die Innenwand des Aufnahmerohrs 18 abgedichtet. Eine zusätzliche kegelförmige Feder 27 ist über dem O-Ring 26 angeordnet.

Am oberen Ende des Halterohrs 16 ist eine Rasteinrichtung 28 zum Arretieren des Aufnahmerohrs 18 in Entnahmestellung vorgesehen. Diese umfaßt mindestens zwei (gegenüberliegende) oder mehr (über den Umfang verteilte) Hülsen 29, die jeweils einen zum Inneren des Halterohrs 16 hin federbeaufschlagten Kolben 30 mit einer kugelausschnittförmigen Rastfläche 31 aufnehmen. Das Aufnahmerohr 18 nimmt unverlierbar an seinem oberen Ende Kugeln 32, die in die Rastflächen 31 einrasten können.

Zur Aufnahme einer mittels eines Analysegeräts, etwa einem Gaschromatographen, zu analysierenden Probe sind beidseitig offene und in das Aufnahmerohr 18 einsetzbare Probenrohre 33 vorgesehen, die eine beispielsweise poröse Packung 34 mit adsorbierendem und/oder sorbierendem Material für die zu analysierenden Analyten enthalten. Hierbei wird die Packung 34 von einer Verengung 35 des Probenrohrs 33 gehalten. Auf dem Probenrohr 33 sitzt ein Transportkopf 36, der in einem sich verjüngenden Abschnitt zwei zueinander beabstandete O-Ringe 37 trägt, mit denen er dicht in das Aufnahmerrohr 18 einsetzbar ist. Zwischen den O-Ringen 37 mündet eine nach außen führende Zutrittsbohrung 38. Außerdem besitzt der Transportkopf 36 eine Schulter 39, gegen die sich die Kugeln 32 legen können.

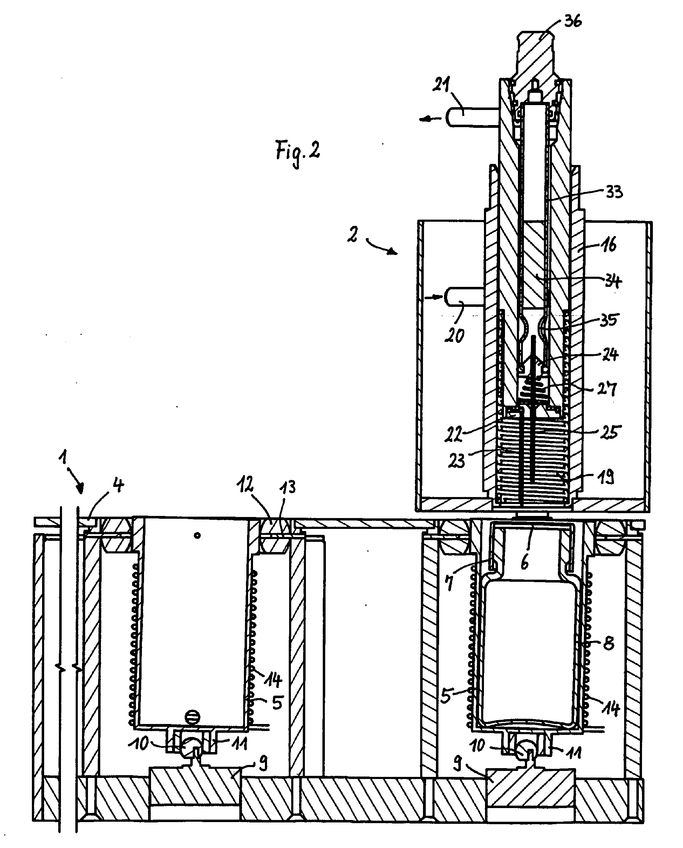

Nach Einsetzen des Probenrohrs 33 und dessen Transportkopf 36 in das Aufnahmerohr 18 gemäß Fig. 1 kann letzteres über den Transportkopf 36 gegen die Kraft der Feder 19 abwärts in Richtung auf den Probenbehälter 8 gedrückt werden, bis die Kugeln 32 in den Rastflächen 31 der Kolben 30, die hierzu zweckmäßigerweise einen angefasten Rand aufweisen können, einrasten, Fig. 2. Hierdurch wird gleichzeitig der Transportkopf 36 durch die Kugeln 32 in dichtenden Sitz in das Aufnahmerohr 18 gedrückt. Zugleich wird dadurch die Zutrittsbohrung 38 und damit das Innere des Probenrohrs 33 mit dem Gasaustrittsanschluß 21 verbunden. Außerdem wird durch die Abwärtsbewegung das Septum 6 des Probenbehälters 8 von den beiden Spritzennadeln 23, 25 durchstoßen und außerdem die Spritzennadel 23 mit dem Gaseintrittsanschluß 20 verbunden.

Dann kann die Probenahme erfolgen, indem man Inertgas von einer Inertgasquelle über den Gaseintrittsanschluß 20 in die Spritzennadel 23 und von dort in den Probenbehälter 8 einströmen läßt, wonach das beladene Inertgas durch die Spritzennadel 25 in das Probenrohr 33 durch die Packung 34 zur Aufnahme der Analyten und aus dem Probenrohr 33 über die Zutrittsbohrung 38 und den Gasaustrittsanschluß 21 herausgeführt wird.

Auch das Halterohr 16 und gegebenenfalls auch eine nicht dargestellte Zuleitung für Inertgas können durch eine nicht dargestellte Heizung und/oder Kühlung (Peltierelement 40 und Ventilator 41) temperiert werden, um so überall eine gleichbleibende Temperatur zu gewährleisten und damit auch einen genormten Gasfluß sicherzustellen.

In den Probennahmepositionen, ob diese nun momentan als Vorbereitungs- oder Entnahmeposition dienen, kann der Probenbehälter 8 über die Bewegung der Behälterhalterung 5 geschüttelt werden. Die kardanische Aufhängung der Behälterhalterung 5 führen zu einer äußerst geringen Belastung zwischen den Spritzennadeln 23, 25 und dem Septum 6. - Gegebenenfalls kann die Probe auch, wie bereits vorstehend ausgeführt, anders durchmischt werden.

Während in einer Probennahmeposition die dortige Probe zur Vorbereitung auf die Entnahme konditioniert wird, erfolgt in der anderen Probennahmeposition die Probennahme von der dort befindlichen, bereits konditionierten Probe durch den Probennehmer 2, der daran anschließend in die andere Probennahmeposition fährt, um dort mit der Probennahme zu beginnen. Hierbei lassen sich für Serien von Proben immer gleiche Konditionier- und Extraktionszeiten, wobei Konditionier- und Extraktionszeiten unterschiedlich sein können, realisieren.

Gegebenenfalls kann für den Probennehmer 2 auch eine zusätzliche neutrale Position vorgesehen sein, wobei eine Position nur als Vorbereitungs- und die andere nur als Entnahmeposition verwendet und der jeweilige Probenbehälter 8 nach Konditionieren aus der Vorbereitungsposition in die Entnahmeposition überführt wird.

Nach der Probenahme kann das Probenrohr 33 mittels eines an seinem Transportkopf 36 angreifenden Greifers entnommen und etwa in eine Thermodesorptionseinrichtung eines Analysegeräts zwecks Analyse eingesetzt werden.

Eine Handhabungseinrichtung 44, die einen in drei zueinander senkrechten Achsen beweglichen Greifer aufweist, mit dem das mit einem Transportkopf 36 versehene Probenrohr 33 gehandhabt werden kann, ist in DE 102 19 790 C1 beschrieben. Hiermit können auch Probenbehälter 8 mit magnetisierbaren Deckel 7 gehandhabt werden, wenn der Greifer der Handhabungseinrichtung 44 zum Halten des Probenbehälters 8 ausgebildet bzw. zu diesem Zweck beispielsweise mit eingesetzten Permanentmagneten, die den Probenbehälter 8 über dessen magnetisierbare Kappe 7 halten können, versehen ist.

Die Verfahrensweise ist dann wie folgt:

Aus einem Magazin für Probenbehälter 8 wird einer mittels der Handhabungseinrichtung 44 entnommen und in die Behälterhalterung 5 der Probennahmeposition eingesetzt, die momentan als Vorbereitungsposition verwendet werden soll. Dort wird die im Probenbehälter 8 befindliche Probe temperiert und/oder geschüttelt.

Der Probennehmer 2 wird über den Probenbehälter 8 mit der zur Entnahme vorbereiteten Probe verfahren (oder verschwenkt, wenn er statt auf einem Schlitten auf einem Schwenkarm angeordnet ist).

Hier oder bereits vor dem Verfahren wird aus einem Magazin für Probenrohre 33 ein mit einer Packung 34 bestücktes und einen Transportkopf 36 tragendes Probenrohr 33 mittels der Handhabungseinrichtung entnommen und in das Aufnahmerohr 18 eingesetzt. Das untere Ende des Probenrohrs 33 sitzt auf dem O-Ring 26 auf. Jedenfalls wird in der Position über dem Probenbehälter 8 mit der zur Entnahme vorbereiteten Probe das Probenrohr 33 und damit das Aufnahmerohr 18 mit der Handhabungseinrichtung 44 gegen die Kraft der Feder 19 abwärts gedrückt, bis letzteres im Halterohr 16 einrastet und damit arretiert ist. Dann haben die Nadeln 23, 25 das Septum 6 des Probenbehälters 8 durchstoßen, die Nadel 25 ragt mit ihrem oberen Ende in das eingesetzte Probenrohr 33 und die Gaszutritts- und -abführbedingungen sind geschaffen.

Dann wird ein Inertgasstrom von einer Inertgasquelle über die Nadel 23 durch den Probenbehälter 8, die Nadel 25 und die Packung 34 im Probenrohr 33 geführt, um Probenmaterial aus der im Probenbehälter 8 enthaltenen Probe aufzunehmen und an die Packung 34 abzugeben.

Danach wird mittels der Handhabungseinrichtung 44 das Probenrohr 33 mit der mit Analyten beladenen Packung 34 am Transportkopf 36 zunächst mit dem Aufnahmerohr 18 unter Lösen von dessen Arretierung hochgezogen. Nach Lösen der Arretierung schiebt die Feder 19 das Aufnahmerohr 18 nach oben in seine Ausgangsposition von Fig. 1. Zugleich wird durch das Lösen der Arretierung auch der von den Kugeln 32 auf die benachbarte Schulter 39 des Transportkopfes 36 ausgeübte Druck beseitigt, so daß mit anfänglicher Unterstützung durch die Feder 27 das Probenrohr 33 aus dem Aufnahmerohr 18 herausgezogen werden kann.

Der Probennehmer 2 wird anschließend in die andere Probennahmeposition zurückgefahren, in der inzwischen eine weitere Probe konditioniert wurde (oder noch wird), um nach Anschluß der Konditionierung dort die Probenahme unter Verwendung eines neuen Probenrohrs 33 durchzuführen.

Das jeweilige Probenrohr 33 mit der beladenen Packung 34 kann gegebenenfalls nach Zwischenlagerung in einem Magazin mit der insoweit nunmehr für die Analyse vorbereiteten Probe etwa zu einer Thermodesorptionseinrichtung eines Analysegerätes mittels der Handhabungseinrichtung 44 transportiert werden.

Anstelle einer in das Probenrohr 33 separat eingesetzten Packung 34 kann diese auch durch eine entsprechende Innenbeschichtung des Probenrohrs 33 gebildet sein.

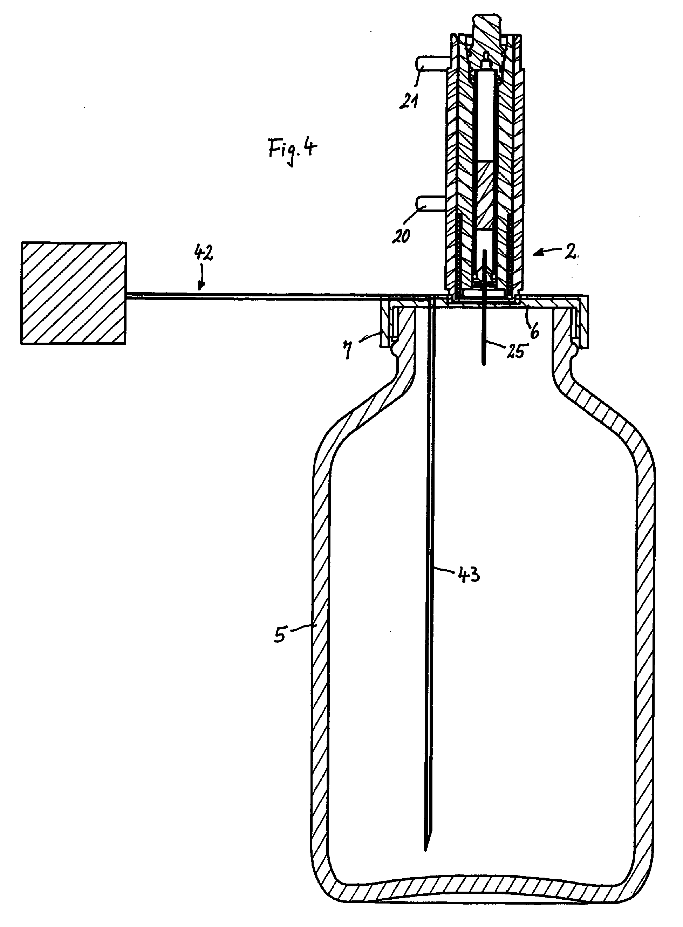

Wenn Probenbehälter 8 mit sehr großen Volumen anstelle von üblichen Vials, beispielsweise Literbehälter, verwendet werden, kann es vorteilhaft sein, anstatt oder zusätzlich zu der Gaszuführung über die Spritzennadel 23 eine separate Gaszuführung 42 vorzusehen, die ein bis nahezu zum Boden des Probenbehälters 8 führendes Rohr 43 umfaßt, so daß das dadurch zugeführte Inertgas praktisch die gesamte Behälterhöhe durchspülen kann, vgl. Fig. 4.

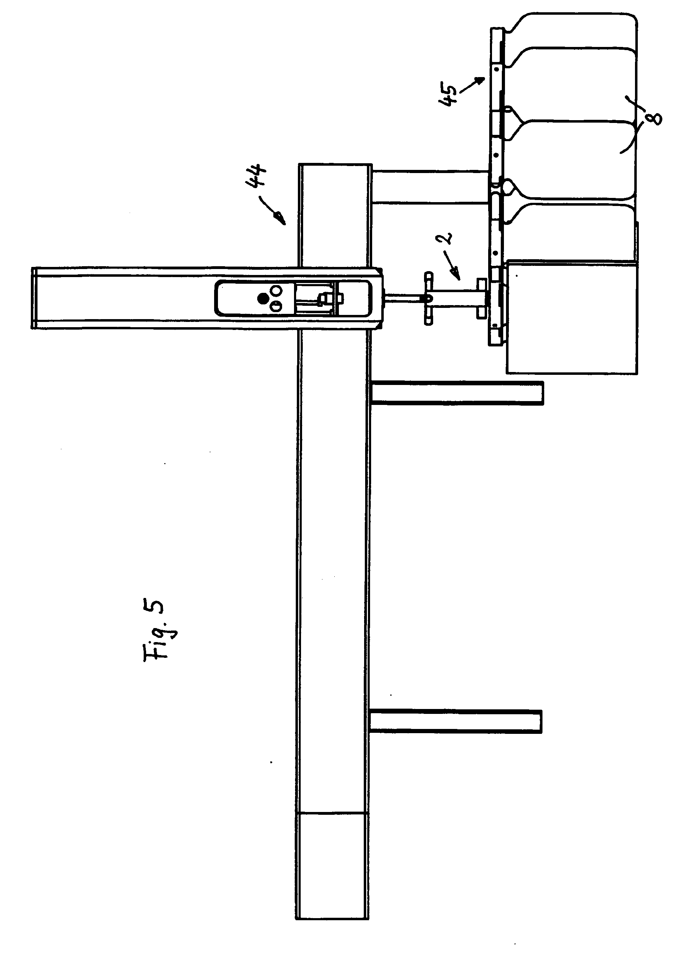

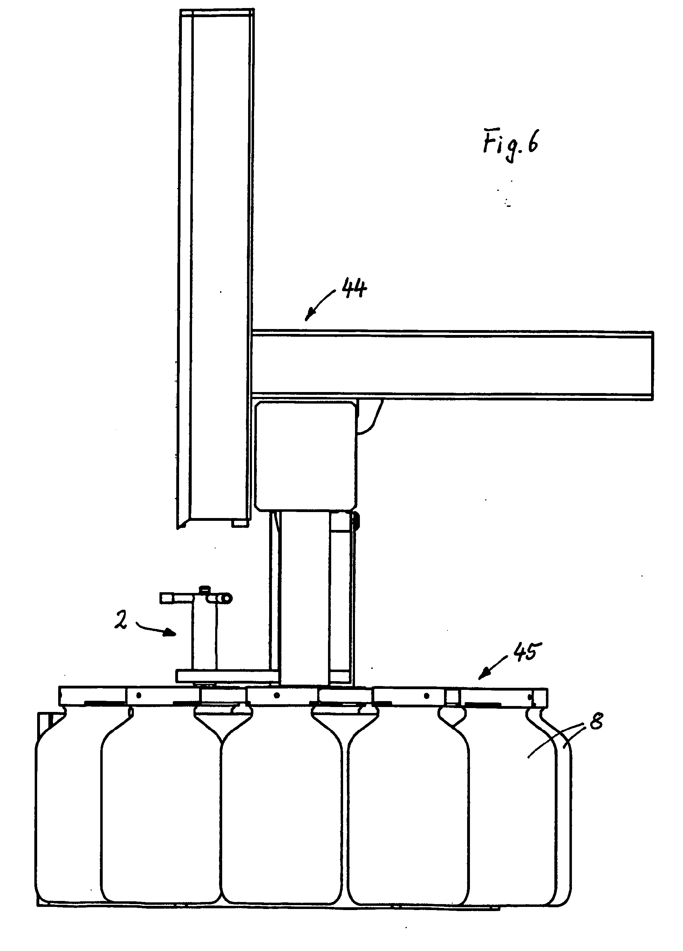

Da man derartig große Probenbehälter 8, wie in Fig. 4 dargestellt, nicht mit einer Handhabungseinrichtung 44 für Vials und Probenrohre 33 handhaben kann, ist es in dem Fall zweckmäßig, die Probenbehälter 8 auf einem Karussell 45 anzuordnen, das den jeweils benötigten Probenbehälter 8 in die Entnahmeposition dreht, so daß mit dem dann darüber angeordneten Probennehmer 2 eine Probe entnommen werden kann, vgl. Fig. 5, 6.

## Patentansprüche

1. Verfahren zur Vorbereitung von Proben für ein Analysegerät, insbesondere einen Chromatographen, wobei
ein mit einem Septum (6) versehener Probenbehälter (8) in eine Entnahmeposition einer einen Probennehmer (2) aufweisenden Probennahmestation gebracht wird,
der Probennehmer (2) in eine Entnahmeposition über dem Probenbehälter (8) angeordnet wird, wobei der Probennehmer (2) ein in Richtung zum Probenbehälter (8) bewegliches und in einer Endposition in einer Halterung (15) arretierbares Aufnahmerohr (18) für ein Probenrohr (33) umfaßt, wobei mit dem Aufnahmerohr (18) eine erste Spritzennadel (25) beweglich ist, die im Aufnahmerohr (18) endet,
ein beidseitig offenes Probenrohr (33), in dem eine Packung (34) zur Aufnahme von Analyten angeordnet ist, in das Aufnahmerohr (18) eingesetzt sowie zusammen mit diesem innerhalb der Halterung (15) in Richtung auf den Probenbehälter (8) unter Durchstoßen des Septums (6) durch die Nadel (25) bewegt und arretiert wird,
ein Inertgasstrom von einer Inertgasquelle über eine mit dem Aufnahmerohr (18) mitbewegliche zweite Spritzennadel (23) durch den Probenbehälter (8), die Nadel (25) und die Packung (34) im Probenrohr (33) geführt wird, und
das Probenrohr (33) mit der mit Analyten beladenen Packung (34) aus dem Aufnahmerohr (18) entnommen wird.

2. Verfahren nach Anspruch 1, **dadurch gekennzeichnet, daß** der Inertgasstrom über eine separate Gaszuführung bis zum Boden des Probenbehälters (8) geführt wird.

3. Verfahren nach einem der Ansprüche 1 oder 2, **dadurch gekennzeichnet, daß** das über die erste Spritzennadel (25) in das Probenrohr (33) eingeführte Inertgas über einen auf dem Probenrohr (33) befindlichen, von einer Handhabungseinrichtung (44) handhabbaren Transportkopf (36) abgeführt wird.

4. Verfahren nach einem der Ansprüche 1 bis 3, **dadurch gekennzeichnet, daß** der Probenbehälter (8) vor und/oder während der Probennahme temperiert wird.

5. Verfahren nach einem der Ansprüche 1 bis 4, **dadurch gekennzeichnet, daß** die Probe vor und/oder während der Probennahme durchmischt wird.

6. Verfahren nach Anspruch 5, **dadurch gekennzeichnet, daß** der Probenbehälter (8) geschüttelt wird.

7. Verfahren nach einem der Ansprüche 1 bis 6, **dadurch gekennzeichnet, daß** abwechselnd in einer Position eine in einem Probenbehälter (8) enthaltene Probe für die Probenahme vorbereitet und in der anderen die Probenahme vorgenommen wird.

8. Probennahmestation zur Vorbereitung von Proben für ein Analysegerät, insbesondere einen Chromatographen, aus einem mit einem Septum (6) versehenen Probenbehälter (7), umfassend
eine in einer Entnahmeposition angeordnete Behälterhalterung (5) für einen Probenbehälter (7),
einen Probennehmer (2) mit einer über einen Probenbehälter (7) in der Entnahmeposition beweglichen Halterung (15) für ein Aufnahmerohr (18) für ein beidseitig offenes Probenrohr (33) mit einer Packung (34) zur Aufnahme von Analyten,
wobei das Aufnahmerohr (18) in der Halterung (15) einführbar und arretierbar ist und eine mitgeführte erste Spritzennadel (25) trägt, die im Inneren des Aufnahmerohrs (18) mündend aus diesem herausragt und das Aufnahmerohr (18) gegen eine Feder (19) in seine Halterung (15) eindrückbar und arretierbar ist, wobei eine zweite, vom Aufnahmerohr (18) mitgeführte Spritzennadel (23) bei in seiner Halterung (15) arretiertem Aufnahmerohr (18) mit einer Inertgaszuführung in der Halterung (15) fluidverbunden ist.

9. Probennahmestation nach Anspruch 8, **dadurch gekennzeichnet, daß** der Probennehmer (2) gegenüber der Behälterhalterung (5) schlittenartig verfahrbar ist.

10. Probennahmestation nach Anspruch 8 oder 9, **dadurch gekennzeichnet, daß** das Aufnahmerohr (18) mittels des Probenrohrs (33) in seine Halterung (15) eindrückbar und arretierbar ist.

11. Probennahmestation nach einem der Ansprüche 8 bis 10, **dadurch gekennzeichnet, daß** das Aufnahmerohr (18) mindestens eine Kugel (32) trägt, die mit einem in Richtung auf das Aufnahmerohr (18) federvorgespannten Kolben (30) der Halterung (15) für das Aufnahmerohr (18) in Rasteingriff bringbar sind.

12. Probennahmestation nach Anspruch 11, **dadurch gekennzeichnet, daß** mittels der eingerasteten Kugeln (32) das Probenrohr (33) in das Aufnahmerohr (18) eindrückbar ist.

13. Probennahmestation nach Anspruch 12, **dadurch gekennzeichnet, daß** das Probenrohr (33) über einen daran befindlichen Transportkopf (36) in das Aufnahmerohr (18) eindrückbar ist.

14. Probennahmestation nach Anspruch 13, **dadurch gekennzeichnet, daß** der Transportkopf (36) für das Probenrohr (33) in Dichteingriff mit dem Aufnahmerohr (18) drückbar ist.

15. Probennahmestation nach Anspruch 14, **dadurch gekennzeichnet, daß** der Transportkopf (36) eine Zutrittsbohrung (38) zu einer Inertgasabführung aufweist.

16. Probennahmestation nach einem der Ansprüche 8 bis 15, **dadurch gekennzeichnet, daß** der Probennehmer (2) temperierbar ist.

17. Probennahmestation nach einem der Ansprüche 8 bis 16, **dadurch gekennzeichnet, daß** in einer Vorbereitungsposition eine weitere Behälterhalterung (5) angeordnet ist.

18. Probennahmestation nach einem der Ansprüche 8 bis 17, **dadurch gekennzeichnet, daß** die Behälterhalterung (5) temperierbar ist.

19. Probennahmestation nach einem der Ansprüche 8 bis 18, **dadurch gekennzeichnet, daß** die Probe durchmischbar ist.

20. Probennahmestation nach Anspruch 19, **dadurch gekennzeichnet, daß** die Behälterhalterung (5) schüttelbar ist.

21. Probennahmestation nach Anspruch 20, **dadurch gekennzeichnet, daß** die Behälterhalterung (5) an ihrem oberen Ende kardanisch aufgehängt ist und an ihrer Unterseite einen Exzenterantrieb (9, 10, 11) aufweist.

## Claims

1. Method for the preparation of samples for an analyser, in particular a chromatograph,
a sample container (8) provided with a septum (6) being brought into an extraction position of a sampling station having a sampler (2),
the sampler (2) being arranged in an extraction position above the sample container (8), the sampler (2) comprising, for a sample tube (33), a reception tube (18) moveable in the direction of the sample container (8) and detainable in an end position in a holder (15), a first syringe needle (25), which terminates in the reception tube (18), being moveable by means of the reception tube (18),
a sample tube (33) open on both sides, in which a pack (34) for the uptake of analytes is arranged, being inserted into the reception, tube (18) and, together with the latter, being moved within the holder (15) in the direction of the sample container (8) and detained, with the septum (6) being pierced by the needle (25),
an inert-gas stream being led from an inert-gas source via a second syringe needle (23), co-moveable with the reception tube (18), through the sample container (8), the needle (25) and the pack (34) in the sample tube (33), and
the sample tube (33), together with the pack (34) laden with analytes, being extracted from the reception tube (18).

2. Method according to Claim 1, **characterized in that** the inert-gas stream is led via a separate gas supply as far as the bottom of the sample container (8).

3. Method according to one of Claims 1 or 2, **characterized in that** the inert gas introduced into the sample tube (33) via the first syringe needle (25) is discharged via a transport head (36) located on the sample tube (33) and capable of being handled by a handling device (44).

4. Method according to one of Claims 1 to 3, **characterized in that** the sample container (8) is thermally controlled before and/or during the sampling.

5. Method according to one of Claims 1 to 4, **characterized in that** the sample is intermixed before and/or during the sampling.

6. Method according to Claim 5, **characterized in that** the sample container (8) is shaken.

7. Method according to one of Claims 1 to 6, **characterized in that**, alternately, a sample contained in a sample container (8) is prepared for sampling in one position and sampling is carried out in the other position.

8. Sampling station for the preparation of samples for an analyser, in particular a chromatograph, from a sample container (7) provided with a septum (6), comprising
a container holder (5), arranged in an extraction position, for a sample container (7),
a sampler (2) with a holder (15), moveable over a sample container (7) in the extraction position, for a reception tube (18) for a sample tube (33) open on both sides, with a pack (34) for the uptake of analytes,
the reception tube (18) being introducible and detainable in the holder (15) and carrying a taken-along first syringe needle (25) which projects inside the reception tube (18) so as to issue out of the latter the reception tube (18) can be pressed into its holder (15) and detained counter to a spring (19) a second syringe needle (23) taken along by the reception tube (18) being, with the reception tube (18) detained in its holder (15), fluid-connected to an inert-gas supply in the holder (15).

9. Sampling station according to Claim 8, **characterized in that** the sampler (2) is moveable in a slide-like manner with respect to the container holder (5).

10. Sampling station according to Claim 8 or 9, **characterized in that** the reception tube (18) can be pressed into its holder (15) and detained by means of the sample tube (33).

11. Sampling station according to one of Claims 8 to 10, **characterized in that** the reception tube (18) carries at least one ball (32) which can be brought into latching engagement with a piston (30), spring-prestressed in the direction of the reception tube (18), of the holder (15) for the reception tube (18).

12. Sampling station according to Claim 11, **characterized in that** the sample tube (33) can be pressed into the reception tube (18) by means of the latched ball (32).

13. Sampling station according to Claim 12, **characterized in that** the sample tube (33) can be pressed via a transport head (36) located thereon into the reception tube (18).

14. Sampling station according to Claim 13, **characterized in that** the transport head (36) for the sample tube (33) can be pressed into sealing engagement with the reception tube (18).

15. Sampling station according to Claim 14, **characterized in that** the transport head (36) has an inlet bore (38) for an inert-gas discharge.

16. Sampling station according to one of Claims 8 to 15, **characterized in that** the sampler (2) can be thermally controlled.

17. Sampling station according to one of Claims 8 to 16, **characterized in that** a further container holder (5) is arranged in a preparation position.

18. Sampling station according to one of Claims 8 to 17, **characterized in that** the container holder (5) can be thermally controlled.

19. Sampling station according to one of Claims 8 to 18, **characterized in that** the sample is intermiscible.

20. Sampling station according to Claim 19, **characterized in that** the container holder (5) is shakeable.

21. Sampling station according to Claim 20, **characterized in that** the container holder (5) is suspended cardanically at its upper end and on its underside has an eccentric drive (9, 10, 11).

## Revendications

1. Procédé destiné à la préparation d'échantillons pour un appareil d'analyse, en particulier un chromatographe, par lequel :
- on apporte un récipient d'échantillons (8) muni d'un septum (6) dans une position de prélèvement d'une station de prélèvement d'échantillons comportant un échantillonneur (2) ;
- on dispose l'échantillonneur (2) dans une position de prélèvement au-dessus du récipient d'échantillons (8), ledit échantillonneur (2) comprenant un tube de réception (18) pour un tube d'échantillon (33), ce tube de réception (18) étant mobile en direction du récipient d'échantillons (8) et arrêtable dans une position finale dans un support (15), et où une première aiguille (25) d'injection, qui se termine dans le tube de réception (18), est mobile avec le tube de réception (18) ;
- on introduit dans le tube de réception (18) un tube d'échantillon (33) ouvert des deux côtés, dans lequel est disposé un bourrage (34) pour la réception des produits à analyser, de façon à le déplacer et l'arrêter ensemble avec le tube de réception (18) à l'intérieur du support (15) en direction du récipient d'échantillons (8) sous la perforation du septum (6) par la première aiguille (25) ;
- on injecte un flux de gaz inerte, depuis une source de gaz inerte, par une seconde aiguille d'injection (23) mobile avec le tube de réception (18), à travers le récipient d'échantillons (8), la première aiguille (25), et le bourrage (34) dans le tube d'échantillon (33) ;
- et on enlève du tube de réception (18) le tube d'échantillon (33) avec le bourrage (34) chargé des produits à analyser.

2. Procédé selon la revendication 1, **caractérisé en ce qu'**on conduit le flux de gaz inerte par une conduite de gaz séparée jusqu'au fond du récipient d'échantillons (8).

3. Procédé selon la revendication 1 ou 2, **caractérisé en ce qu'**on conduit le gaz inerte injecté par la première aiguille (25) d'injection dans le tube d'échantillon (33) par une tête de transport (36) située sur le tube d'échantillon (33) et manipulable par un manipulateur (44).

4. Procédé selon l'une des revendications 1 à 3, **caractérisé en ce qu'**on tempère le récipient d'échantillons (8) avant et/ou pendant le prélèvement d'échantillons.

5. Procédé selon l'une des revendications 1 à 4, **caractérisé en ce qu'**on mixe l'échantillon avant et/ou pendant le prélèvement d'échantillons.

6. Procédé selon la revendication 5, **caractérisé en ce qu'**on secoue le récipient d'échantillons (8).

7. Procédé selon l'une des revendications 1 à 6, **caractérisé en ce que** tour à tour, dans une position on prépare l'échantillon contenu dans un récipient d'échantillons (8) pour le prélèvement d'échantillons, et dans l'autre position on effectue le prélèvement d'échantillons.

8. Station de prélèvement d'échantillons pour la préparation d'échantillons pour un appareil d'analyse, en particulier un chromatographe, depuis un récipient d'échantillons (7) muni d'un septum (6), comprenant :
- un support de récipient (5) pour un récipient d'échantillons (7) disposé dans une position de prélèvement,
- un échantillonneur (2) avec un support (15) mobile au-dessus du récipient d'échantillons (7) dans la position de prélèvement, ledit support (15) prévu pour un tube de réception (18) pour un tube d'échantillon (33) ouvert des deux côtés lequel comporte un bourrage (34) pour la réception des produits à analyser,
où le tube de réception (18) est insérable et arrêtable dans le support (15), et porte une première aiguille (25) d'injection qui est mobile avec lui, laquelle première aiguille (25) débouche à l'intérieur du tube de réception (18) et est saillante hors de ce dernier, et où le tube de réception (18) est mobile dans son support (15) en compression contre un ressort (19) et est arrêtable dans son support (15), et où une seconde aiguille d'injection (23) mobile avec le tube de réception (18) est reliée fluidiquement à ue conduite de gaz inerte dans le support (15) quand le tube de réception (18) est arrêté dans son support (15).

9. Station de prélèvement d'échantillons selon la revendication 8, **caractérisée en ce que** l'échantillonneur (2) est mobile à la façon d'un chariot par rapport au support de récipient (5).

10. Station de prélèvement d'échantillons selon la revendication 8 ou 9, **caractérisée en ce que** le tube de réception (18) est mobile par compression et arrêtable dans son support (15) au moyen du tube d'échantillon (33).

11. Station de prélèvement d'échantillons selon l'une des revendications 8 à 10, **caractérisée en ce que** le tube de réception (18) porte au moins une bille (32), agencée pour coopérer avec un piston (30) du support (15) pré-contraint par ressort dans une direction vers le tube de réception (18) pour un engagement d'arrêt de ce dernier.

12. Station de prélèvement d'échantillons selon la revendication 11, **caractérisée en ce que** le tube d'échantillon (33) est enfonçable dans le tube de réception (18) au moyen de la bille (32) enclenchée.

13. Station de prélèvement d'échantillons selon la revendication 12, **caractérisée en ce que** le tube d'échantillon (33) est enfonçable dans le tube de réception (18) par une tête de transport (36) qui y est située.

14. Station de prélèvement d'échantillons selon la revendication 13, **caractérisée en ce que** la tête de transport (36) pour le tube d'échantillon (33) peut être mise en pression par prise étanche avec le tube de réception (18).

15. Station de prélèvement d'échantillons selon la revendication 14, **caractérisée en ce que** la tête de transport (36) comporte un alésage d'accès (38) pour une conduite de gaz inerte.

16. Station de prélèvement d'échantillons selon l'une des revendications 8 à 15, **caractérisée en ce que** l'échantillonneur (2) est thermorégulable.

17. Station de prélèvement d'échantillons selon l'une des revendications 8 à 16, **caractérisée en ce que** un autre support de récipient (5) est agencé dans une position de préparation.

18. Station de prélèvement d'échantillons selon l'une des revendications 8 à 17, **caractérisée en ce que** le support de récipient (5) est thermorégulable.

19. Station de prélèvement d'échantillons selon l'une des revendications 8 à 18, **caractérisée en ce que** l'échantillon est mixable.

20. Station de prélèvement d'échantillons selon la revendication 19, **caractérisée en ce que** le support de récipient (5) est remuable.

21. Station de prélèvement d'échantillons selon la revendication 20, **caractérisée en ce que** le support de récipient (5) est accroché à sa partie supérieure par une liaison de type cardan, et comporte à sa partie inférieure un entraînement à excentrique (9, 10, 11).
